(19) Europäisches Patentamt
European Patent Office
Office européen des brevets

(11) **EP 3 525 136 A1**

(12) **EUROPEAN PATENT APPLICATION**

(43) Date of publication:
**14.08.2019 Bulletin 2019/33**

(51) Int Cl.:
**G06N 3/00** (2006.01)   **G06N 7/00** (2006.01)
**G06N 99/00** (2019.01)

(21) Application number: **18275016.6**

(22) Date of filing: **08.02.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(71) Applicant: **Prowler.io Limited
Cambridge, Cambridgeshire CB2 1LA (GB)**

(72) Inventors:
• **BOU-AMMAR, Haitham
Cambridge, Cambridgeshire CB2 1LA (GB)**

• **TUTUNOV, Rasul
Cambridge, Cambridgeshire CB2 1LA (GB)**
• **KIM, Dongho
Cambridge, Cambridgeshire CB2 1LA (GB)**
• **TOMCZAK, Marcin
Cambridge, Cambridgeshire CB2 1LA (GB)**

(74) Representative: **EIP
EIP Europe LLP
Fairfax House
15 Fulwood Place
London WC1V 6HU (GB)**

(54) **DISTRIBUTED MACHINE LEARNING SYSTEM**

(57)    There is provided a computer-implemented method of determining policy parameters for multiple reinforcement learning tasks. The policy parameters for each task depend on a common set of parameters shared by the tasks and a task-specific set of parameters. The method includes each of a plurality of processors receiving trajectory data from a subset of the tasks, and determining a local version of the common set of parameters as well as the task-specific set of parameters for each task in the subset. Determining the local version includes iteratively determining partial input data and taking part in a distributed computation with the other processors to determine, using the partial input data, a first set of intermediate variables. The method then includes updating the local version of the common set of parameters using a subset of the first set of intermediate variables. The local versions of the common set of parameters converge.

Fig. 2

**Description**

<u>Technical Field</u>

This invention is in the field of machine learning systems, and has particular applicability to distributed reinforcement learning systems.

<u>Background</u>

Reinforcement learning involves a computer system learning how to perform tasks by analysing data corresponding to previously-experienced instances of the same or similar tasks. Multi-task reinforcement learning (MTRL) has been proposed as a means of increasing the efficiency of reinforcement learning in cases where data is analysed from several different tasks, allowing for knowledge transfer between the different tasks.

The application of MTRL to particular problems is often computationally expensive, especially for tasks with high-dimensional state and/or action spaces, or in cases where extensive volumes of experience data need to be analysed. Accordingly, there is a need for an efficient and accurate distributed implementation of MTRL such that the computational burden can be shared by multiple processors. Implementing a distributed routine for MTRL is not straightforward due to the need for knowledge transfer between different tasks, requiring sharing of data between processor nodes. Existing attempts to implement MTRL using multiple processors, for example the method discussed in "Scalable Multitask Policy Gradient Reinforcement Learning" by S. El Bsat, H. Bou Ammar, and M. E. Taylor (Proceedings of the Thirty-First AAAI Conference on Artificial Intelligence, pp 1847-1853, February 4-9, 2017), result in relatively slow convergence rates, which are only achieved after making restrictive assumptions about an objective function.

<u>Summary</u>

According to one aspect of the present invention, there is provided a computer-implemented method of determining policy parameters for each of a plurality of reinforcement learning tasks. The policy parameters depend on a common set of parameters shared by the plurality of tasks and a task-specific set of parameters. The method includes each of a plurality of processors receiving trajectory data from a subset of the plurality of tasks, and determining using the received trajectory data: a local version of the common set of parameters; and the task-specific set of parameters for each of the subset of the plurality of tasks. Determining the local version of the common set of parameters includes iteratively determining partial input data from the received trajectory data for determining a first set of intermediate variables, and taking part in a distributed computation with the other processors to determine the first set of intermediate variables. Once the first set of intermediate variables have been determined, the method then includes updating the local version of the common set of parameters using a subset of the first set of intermediate variables. After at least one iteration, the local versions of the common set of parameters determined by the plurality of processors converge.

Further aspects of the invention will become apparent from the following description of an embodiment of the invention, given by way of example only, which is made with reference to the accompanying drawings.

<u>Brief Description of the Drawings</u>

Figure 1 shows an example of a task for a reinforcement learning problem.
Figure 2 is a schematic diagram showing a network of processors being used to solve a reinforcement learning problem involving multiple tasks.
Figure 3 is a schematic diagram of a network of processors configured in accordance with the present invention.
Figure 4 is a flow diagram representing a routine for solving a multi-task reinforcement learning problem.
Figure 5 is a flow diagram representing a subroutine for updating a shared knowledge base.
Figure 6 shows examples of benchmark tasks used to test the performance of a multi-task reinforcement learning routine.
Figure 7 shows bar charts illustrating times taken by processor networks to reach solutions to multi-task reinforcement learning problems for different task domains.
Figure 8 shows bar charts illustrating times taken by processor networks to reach solutions to multi-task reinforcement learning problems for different network topologies.
Figure 9 shows plots illustrating the convergence of consensus errors in multi-task reinforcement learning problems.
Figure 10 shows plots illustrating the convergence of objective values in multi-task reinforcement learning problems.
Figure 11 is a schematic diagram of a computing device configured for use in a network according to the present

invention.

<u>Detailed Description</u>

**Reinforcement learning: overview**

For the purposes of the following description and accompanying drawings, a reinforcement learning problem is definable by specifying the characteristics of one or more *agents* and an *environment.* The methods and systems described herein are applicable to a wide range of reinforcement learning problems.

A software agent, referred to hereafter as an *agent*, is a computer program component that makes decisions based on a set of input signals and performs actions based on these decisions. In some applications of reinforcement learning, each agent is associated with a real-world entity (for example an autonomous robot). In other applications of reinforcement learning, an agent is associated with a virtual entity (for example, a non-playable character (NPC) in a video game). In some examples, an agent is implemented in software or hardware that is part of a real world entity (for example, within an autonomous robot). In other examples, an agent is implemented by a computer system that is remote from a real world entity.

An *environment* is a system with which agents interact, and a complete specification of an environment is referred to as a *task.* It is assumed that interactions between an agent and an environment occur at discrete time steps labelled h = 0,1, 2, 3, .... The discrete time steps do not necessarily correspond to times separated by fixed intervals. At each time step, the agent receives data corresponding to an observation of the environment and data corresponding to a reward. The data corresponding to an observation of the environment is referred to as a *state signal* and the observation of the environment is referred to as a *state.* The state perceived by the agent at time step h is labelled $s_h$. The state observed by the agent may depend on variables associated with the agent-controlled entity, for example in the case that the entity is a robot, the position and velocity of the robot within a given spatial domain. A state $s_h$ is generally represented by a $k$-dimensional state vector $x_h$, whose components are variables that represent various aspects of the corresponding state.

In response to receiving a state signal indicating a state $s_h$ at a time step $h$, an agent is able to select and perform an *action* $a_h$ from a set of available actions in accordance with a Markov Decision Process (MDP). In some examples, the state signal does not convey sufficient information to ascertain the true state of the environment, in which case the agent selects and performs the action $a_h$ in accordance with a Partially-Observable Markov Decision Process (PO-MDP). Performing a selected action generally has an effect on the environment. Data sent from an agent to the environment as an agent performs an action is referred to as an *action signal.* At the next time step $h + 1$, the agent receives a new state signal from the environment indicating a new state $s_{h+1}$. In some examples, the new state signal is initiated by the agent completing the action $a_h$. In other examples the new state signal is sent in response to a change in the environment.

Depending on the configuration of the agents and the environment, the set of states, as well as the set of actions available in each state, may be finite or infinite. The methods and systems described herein are applicable in any of these cases.

Having performed an action $a_h$, an agent receives a *reward signal* corresponding to a numerical *reward* $r_{h+1}$, where the reward $r_{h+1}$ depends on the state $s_h$, the action $a_h$ and the state $s_{h+1}$. The agent is thereby associated with a sequence of states, actions and rewards $(s_h, a_h, r_{h+1}, s_{h+1}, ...)$ referred to as a trajectory $\tau$. The reward is a real number that may be positive, negative, or zero.

In response to an agent receiving a state signal, the agent selects an action to perform based on a *policy.* A policy is a stochastic mapping from states to actions. If an agent follows a policy $\pi$, and receives a state signal at time step $h$ indicating a specific state $s_h$, the probability of the agent selecting a specific action $a_h$ is denoted by $\pi(a_h|s_h)$. A policy for which $\pi(a_h|s_h)$ takes values of either 0 or 1 for all possible combinations of $a_h$ and $s_h$ is a *deterministic* policy. Reinforcement learning algorithms specify how the policy of an agent is altered in response to sequences of states, actions, and rewards that the agent experiences.

Generally, the objective of a reinforcement learning algorithm is to find a policy that maximises the expectation value of a *return*, where the value of a return at any time depends on the rewards received by the agent at future times. For some reinforcement learning problems, the trajectory $\tau$ is finite, indicating a finite sequence of time steps, and the agent eventually encounters a *terminal state* $s_H$ from which no further actions are available. In a problem for which $\tau$ is finite, the finite sequence of time steps refers to an *episode* and the associated task is referred to as an *episodic* task. For other reinforcement learning problems, the trajectory $\tau$ is infinite, and there are no terminal states. A problem for which $\tau$ is infinite is referred to as an infinite horizon task. As an example, a possible definition of a return for an episodic task is given by Equation (1) below:

$$\Re(\tau) = \frac{1}{H} \sum_{h=0}^{H} r_{h+1}.$$ 
(1)

In this example, the return $\Re(\tau)$ is equal to the average reward received per time step for the trajectory $\tau$. A skilled person will appreciate that this is not the only possible definition of a return. For example, in R-learning algorithms, the return given by Equation (1) is replaced with an infinite sum over rewards minus an average expected reward.

**Policy search reinforcement learning**

In policy search reinforcement learning, a policy is parameterised by a $k$-dimensional vector $\theta \in \mathbb{R}^k$, where $k$ is the length of the state vector $x_h$ encoding relevant information about the state $s_h$. An example of such a policy is a stochastic Gaussian policy given by Equation (1):

$$\pi(a_h | x_h) \sim \mathcal{N}(\theta^\mathrm{T} x_h, \sigma^2).$$ 
(2)

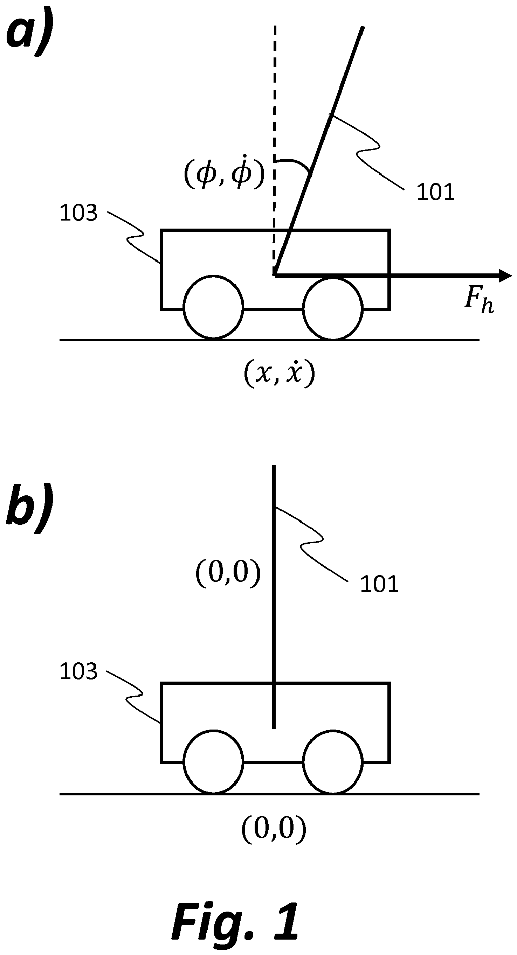

Equation (2) states that in response to experiencing a state at time step $h$ represented by a state vector $x_h$, a computer-controlled entity following the Gaussian policy selects an action $a_h$ according to a Gaussian (normal) probability distribution with mean $\theta^\mathrm{T} x_h$ and variance $\sigma^2$. Figure 1a shows a specific example of a task for a one-dimensional dynamical system in which a uniform rigid pole 101 is connected at one end by a hinge to a cart 103. The position and velocity of the cart are given by $x$ and $\dot{x}$ respectively, and the angular position and velocity with respect to the vertical are given by $\phi$ and $\dot{\phi}$ respectively. The state at any time step $h$ can be represented by a four-dimensional state vector $x_h = (x, \dot{x}, \phi, \dot{\phi})$. The aim of the reinforcement learning problem is to learn a policy that maps each possible state vector $x_h$ within a given domain to a force $F_h$ to be applied to the cart, such that given any initial state $x_0$ the domain, a sequence of forces will be applied such that the cart ends up in a target state $x_H = (0,0,0,0)$ as shown in Figure 1b. In this example, the reward is chosen to be $r_{h+1} = -\|x_h - x_H\|_2$, so that the system is penalised at each time step according to the $L_2$ norm of the state vector at that time step and the target state vector. The task is parameterised by the mass of the cart, the mass and length of the pole, and a damping constant governing the torque exerted by the hinge. In this example, the force is assumed to be normally-distributed around about a mean value that depends linearly on the state vector such that $F_h$ = $\theta^\mathrm{T} x_h + \varepsilon$, where $\varepsilon \sim \mathcal{N}(0, \sigma^2)$, which corresponds to the policy of Equation (2). The stochastic term $\varepsilon$ is included to ensure that a range of states are explored during the learning process (a larger value of $\sigma^2$ leading to a greater degree of exploration). In this example, the dynamical system is simulated, but the methods and systems described herein are equally applicable to systems of real world entities, as well as in a wide range of contexts other than that of dynamical systems.

The example task of Figure 1 is characterised by a four-dimensional state space to a one-dimensional action space. The methods and systems described herein equally apply to tasks having higher-dimensional state and action spaces. For example, the policy of Equation (2) is extendable to tasks having a multi-dimensional action space by replacing the normal distribution with a multivariate normal distribution. For tasks having many degrees of freedom, other types of policy may be suitable, for example policies based on neural network function approximators, in which the vector of parameters represents the connection weights within the network. The methods and systems described herein are applicable to any reinforcement learning problem in which a policy is expressible in terms of a vector of parameters.

Given a task such as that described above, an agent is faced with the problem of searching for a parameter $\theta^*$ that maximises the objective given by Equation (3) below, which represents the expected return for the policy $\pi_\theta$:

$$J(\theta) = \mathbb{E}_{p_\theta(\tau)}[\Re(\tau)] = \int p_\theta(\tau)\Re(\tau)\mathrm{d}\tau,$$ 
(3)

where $\tau$ is a trajectory consisting of a sequence of state-action pairs $[x_{0:H}, a_{0:H}]$ and $\Re(\tau)$ is defined as in Equation (1). The probability $p_\theta(\tau)$ of acquiring a trajectory $\tau$ whilst following a policy parameterised by a vector $\theta$ is given by Equation (4):

$$p_\theta(\tau) = P_0(x_0) \prod_{h=1}^{H} p(x_{h+1}|x_h, a_h)\pi_\theta(a_h|x_h), \qquad (4)$$

in which $P_0(x_0)$ is a distribution of initial states $x_0$, and $p(x_{h+1}|x_h,a_h)$ denotes the probability density for transitioning to a state $x_{h+1}$ if the action $a_h$ is performed from a state $x_h$.

**Policy gradient methods**

In order to search for a parameter vector $\theta^*$ that maximises the objective of Equation (3), a policy gradient method is adopted, in which trajectories are generated using a fixed policy $\pi_\theta$, and a new policy $\pi_{\tilde\theta}$ is determined by searching for a parameter vector $\tilde\theta$ that maximises a lower bound on the corresponding new value of the objective. An appropriate lower bound for the logarithm of the objective is given by Equation (5):

$$\log \mathcal{J}(\tilde\theta) \propto -D_{KL}\left(p_\theta(\tau)\Re(\tau)||p_{\tilde\theta}(\tau)\right) = \mathcal{J}_{\mathcal{L},\theta}(\tilde\theta), \qquad (5)$$

in which $D_{KL}$ denotes the KL divergence between two probability distributions. The method proceeds with the aim of maximising this lower bound, or equivalently solving the following minimisation problem:

$$\min_{\tilde\theta}\{-\mathcal{J}_{\mathcal{L},\theta}(\tilde\theta)\}. \qquad (6)$$

**Multi-task reinforcement learning**

Reinforcement learning algorithms often require large numbers of trajectories in order to determine policies which are successful with regard to a particular task. Acquiring a large number of trajectories may be time-consuming, and particularly in the case of physical systems such as those in robotics applications, may lead to damage to, or wear on, the entities being controlled during the learning process. Furthermore, a policy learned using a method such as that described above, is only likely to be successful for the specific task used for the learning phase. In particular, if parameters of the task are varied (for example, the mass of the cart, the mass or length of the pole, and/or the damping constant, in the example of Figure 1), the agent will be required to learn an entirely new policy, requiring another extensive phase of collecting data from multiple trajectories.

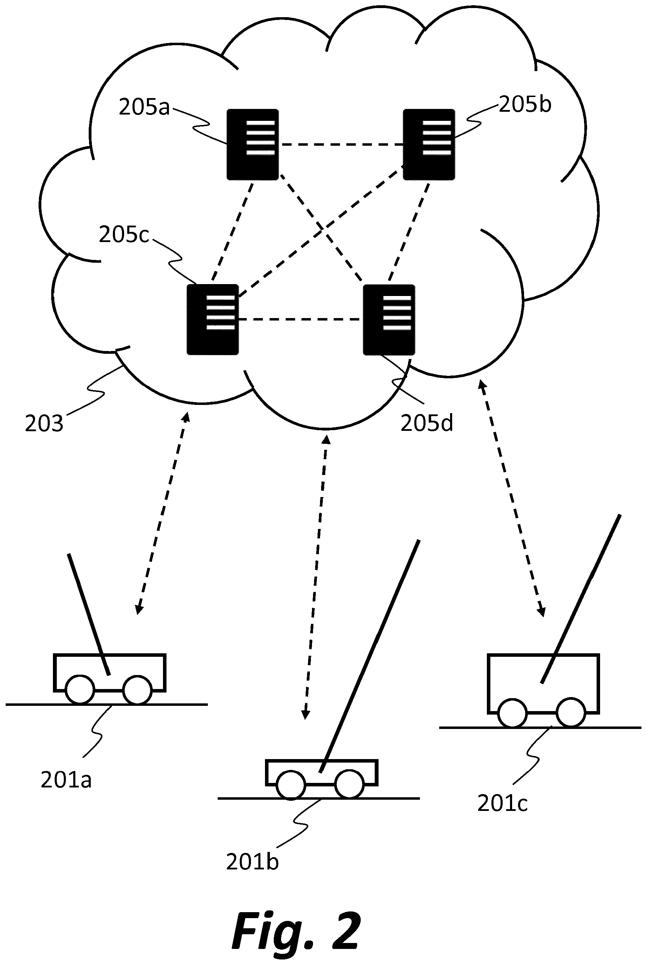

Multi-task reinforcement learning (MTRL) methods have been developed to overcome the problems described above. In MTRL, an agent receives trajectories from multiple tasks, and the objective of the learning algorithm is to determine policies for each of these tasks, taking into account the possibility of knowledge transferability between tasks. MTRL problems can be divided into two cases, the first case being single domain MTRL and the second case being cross-domain MTRL. In the single domain case, the tasks vary with respect to each other only by varying parameter values, and accordingly have state and action spaces with common dimensionality. Figure 2 shows an example of a single domain MTRL problem having multiple tasks 201, of which three tasks 201a-c are shown. Each of the tasks 201 is a cart-pole system similar to the example of Figure 1, but the mass of the cart and the length of the pole differs between tasks. The aim of the MTRL problem is to learn a policy for each of the tasks analogous to that in the example of Figure 1, making use of knowledge transferability between the tasks to reduce the number of trajectories required from each task for successful behaviour.

In cross-domain MTRL, the dimensionality of the state and action spaces may differ between tasks, and the tasks may correspond to different types system altogether.

Given a set of $T$ tasks, an MTRL algorithm searches for a set of optimal policies $\Pi^* = \{\pi^{(1)*}, ..., \pi^{(T)*}\}$ with corresponding parameters $\Theta^* = \{\theta_1^*, ..., \theta_T^*\}.$ The method is formulated analogously to the policy search method outlined above, but instead of posing $T$ minimisation problems of the form given in (6), a single multi-task learning objective is formed:

$$\min_{\tilde\theta_1:\tilde\theta_T}\left\{\frac{1}{T}\sum_{t=1}^{T} -\mathcal{J}_{\mathcal{L},\theta_t}^{(t)}(\tilde\theta_t) + \mathrm{Reg}(\tilde\theta_1, ..., \tilde\theta_T)\right\}, \qquad (7)$$

where $\mathcal{J}_{\mathcal{L},\theta_t}^{(t)}(\tilde{\theta}_t)$ is the lower bound on the expected return for task $t$, and Reg($\tilde{\theta}_1, ..., \tilde{\theta}_T$) is a regularising term used to impose a common structure needed for knowledge transfer. Knowledge transfer is encoded into the objective by representing the parameter vector associated with each task as a linear combination of shared latent components such that $\tilde{\theta}_t = Ls_t$, where $s_t \in \mathbb{R}^k$ is a task-specific vector, and $L \in \mathbb{R}^{d \times k}$ is a matrix that serves as a shared knowledge base for all of the tasks. The regularising term in (7) is chosen such that the components of $L$ are ensured to be bounded, and the components of $s_t$ for each task are encouraged to be sparse, resulting in a high degree of knowledge transfer between tasks. The learning objective is thus given by:

$$\min_{L, s_1 : s_T} \left\{ \frac{1}{T} \sum_{t=1}^{T} \left[ -\mathcal{J}_{\mathcal{L},\theta}^{(t)}(Ls_t) + \mu_1 \|s_t\|_1 \right] + \mu_2 \|L\|_F \right\} \qquad (8)$$

where $\|\cdot\|_1$ is the L$_1$ norm, $\|\cdot\|_F$ is the Frobenius norm, and $\mu_1$, $\mu_2$ are parameters that control the degree of knowledge transfer.

## Distributed MTRL

A straightforward approach to solving the minimisation problem (8) is to construct a concatenated data set of trajectories from all of the tasks, and to solve the minimisation problem in a batch fashion using central processing. However, the computational cost of this approach increases rapidly with both the number of tasks and the number of trajectories per task, potentially rendering the memory requirements and computing time prohibitive for all but the simplest MTRL problems.

The present invention provides an efficient distributed implementation of MTRL in the case that that multiple processors are available, thereby overcoming the scalability issues associated with central processing.

The present invention has significant advantages over known MTRL methods. For example, the present method achieves quadratic convergence in solving for the coefficients of the shared knowledge base $L$. By contrast, state-of-the-art known methods achieve only linear convergence. Furthermore, existing methods require restrictive assumptions to be made about the learning objective, whereas the present method requires no such assumptions, and is hence more general.

## Laplacian-based distributed MTRL

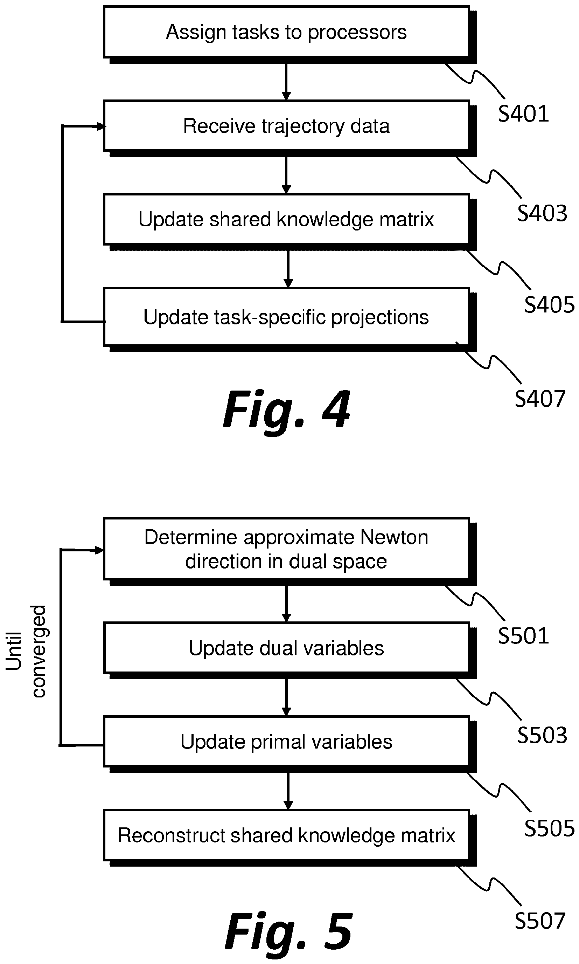

In one embodiment of the present invention, a network of processors is provided, in which the processors are connected by an undirected graph $\mathcal{G} = (v, \varepsilon)$, with $v$ denoting the processors (nodes) and $\varepsilon$ denoting the connections between processors (edges). The total number of processors is $n$, and no restrictions are made on the graph topology. As shown in Figure 4, each of $T$ learning tasks is assigned, at S401, to one of the $n$ processors, such that the total number of tasks assigned to the $i^{\text{th}}$ processor is given by $T_i$, and therefore $\sum_i T_i = T$. Each processor receives, at S403, trajectory data for each task it has been assigned, the trajectory data for each task corresponding to sequences of states, actions and rewards generated by an agent following the policy $\pi_{\theta_t}$.

The present method proceeds with the objective of minimising the objective (8) in two stages. During the first stage the network updates, at S405, the coefficients of the shared knowledge matrix $L$. During this stage, the task-specific $s_t$ values are held constant. This update is not straightforward, and is generally expensive in terms of computational resources due to the dependence of $L$ on all of the training tasks. One of the contributions of the present invention is to provide an efficient distributed method for updating $L$.

Having updated the shared knowledge matrix $L$, each processor updates, at S407, the task-specific vectors $s_t$ for each task it has been assigned. During this stage, the $i^{\text{th}}$ processor solves $T_i$ task-specific problems of the form

$$\min_{s_t} \left\{ -\mathcal{J}_{\mathcal{L},\theta}^{(t)}(Ls_t) + \mu_1 \|s_t\|_1 \right\}, \qquad (9)$$

which are immediately recognisable as separate Lasso problems, and can thus be solved straightforwardly using a conventional Lasso solver. The application of Lasso solvers to problems such as (9) is well-known in the art, and therefore will not be described in further detail. Having updated $L$ and $s_t$, the processors update the policy parameters $\tilde{\theta}_t = Ls_t$ for each task. If necessary, further trajectory data is generated for each task using the updated policy parameters $\tilde{\theta}_t$ in place of $\theta_t$, and the iterative reinforcement learning process begins again from S403.

A method for updating $L$ in accordance with the present invention is described hereafter. Holding $s_t$ fixed as described above leads the following reduced minimisation problem being posed:

$$\min_{L} \left\{ \frac{1}{T} \sum_{t=1}^{T} -\mathcal{J}_{\mathcal{L},\theta}^{(t)}(Ls_t) + \mu_2 \|L\|_F^2 \right\}. \tag{10}$$

In order to solve (10) using a distributed implementation, the bi-product $Ls_t$ is rewritten in terms of the column-wise vectorisation vec($L$) of the shared knowledge matrix $L$:

$$Ls_t = \mathrm{vec}(Ls_t) = (s_t^T \otimes I_{d \times d})\mathrm{vec}(L). \tag{11}$$

Using this notation, the minimisation problem can be rewritten for distributed processing as

$$\min_{\mathrm{vec}(L_1):\mathrm{vec}(L_n)} \left\{ \sum_{i=1}^{n} \left( \sum_{t=1}^{T_i} -\mathcal{J}_{\mathcal{L},\theta}^{(t)}(L_i s_t) + \tilde{\mu}_2 \|L_i\|_F^2 \right) \right\}, \tag{12}$$

such that

$$\mathrm{vec}(L_1) = \mathrm{vec}(L_2) = \cdots = \mathrm{vec}(L_n), \tag{13}$$

Where $\tilde{\mu}_2 = T\mu_2$, and $L_i$ for $i = 1, ..., n$ denotes a local version of $L$ stored by the $i^{\text{th}}$ processor. Equation (13) imposes a consensus condition between the local copies. For convenience, a set of $dk$ vectors $y_1, ..., y_{dk}$ is introduced, defined in terms of the components of $L_i$ for $i = 1, ..., n$ as $y_r = [\mathrm{vec}(L_1)_{(r)}, ...,\mathrm{vec}(L_n)_{(r)}]^T$, allowing (12) to be rewritten as

$$\min_{y_1:y_n} \sum_{i=1}^{n} f_i(y_1(i), ..., y_{dk}(i)), \tag{14}$$

in which

$$f_i\big(y_1(i), ..., y_{dk}(i)\big) = \sum_{t=1}^{T_i} \left( -\mathcal{J}_{\mathcal{L},\theta}^{(t)}\big((s_t^T \otimes I_{d \times d})\tilde{y}_i\big) + \mu_2 \|\tilde{y}_i\|_2^2 \right) \tag{15}$$

is the cost function associated with the $i^{\text{th}}$ node. The consensus condition of Equation (13) is replaced by the following condition:

$$\mathfrak{L}y_r = 0 \quad \text{for} \quad r = 1, ..., dk, \tag{16}$$

in which $\mathfrak{L}$ is the Laplacian matrix of the graph $\mathcal{G}$, defined by:

$$\mathfrak{L}(i,j) = \left\{ \begin{array}{ll} \deg(i) & \text{for } i = j \\ -1 & \text{for } (i,j) \in \varepsilon \\ 0 & \text{otherwise,} \end{array} \right. \tag{17}$$

where deg($i$) denotes the degree of the $i^{\text{th}}$ node. It is well known that the Laplacian matrix of any graph is symmetric diagonally dominant (SDD), and it is this property that allows the constrained minimisation problem defined by (14) and (16) to be solved efficiently using a distributed implementation as described hereafter. Equation (16) can be written concisely as $My = 0$, where $M = I_{dk \times dk} \otimes \mathfrak{L} \in \mathbb{R}^{ndk \times ndk}$ and

$$y = \left[ y_1^{\mathrm{T}}, \ldots, y_{dk}^{\mathrm{T}} \right]^{\mathrm{T}}.$$

**Solving Laplacian-based distributed MTRL**

According to a well-known method in the field of optimisation theory, the constrained optimisation problem defined by (14) and (16) is solved by reference to the dual function $q(\lambda)$:

$$q(\lambda) = \sum_{i=1}^{n} \inf_{y_1(i):y_{dk}(i)} \left\{ f_i \left( y_1(i), \ldots, y_{dk}(i) \right) + y_1(i)[\mathfrak{L}\lambda_1]_i + \cdots \right. \tag{18}$$
$$\left. + y_{dk}(i)[\mathfrak{L}\lambda_{dk}]_i \right\},$$

in which $\lambda = \left[ \lambda_1^{\mathrm{T}}, \ldots, \lambda_{dk}^{\mathrm{T}} \right]^{\mathrm{T}}$ is a vector of Lagrange multipliers, otherwise referred to as dual variables. The dual variables are initialised to arbitrary values, and starting with an initial set of values for $y$, the method proceeds to update $\lambda$ such that $q(\lambda)$ moves closer to its maximum. Having updated $\lambda$, the optimisation routine then updates $y$. The method continues to update $\lambda$ and $y$ in turn until convergence is achieved, and the matrix $L$ is constructed from the converged coefficients of $y$.

During the $l^{th}$ update step, the dual variables $\lambda$ are updated using the rule

$$\lambda^{[l+1]} = \lambda^{[l]} + \alpha^{[l]} \tilde{v}^{[l]}, \tag{19}$$

where $\tilde{v}^{[l]} \in \mathbb{R}^{ndk}$ is an approximation of the Newton direction. The Newton direction $v^{[l]}$ is the solution to the equation $H^{[l]}v^{[l]} = -g^{[l]}$, where $H^{[l]}$ is the Hessian matrix of the dual function and $g^{[l]} = \nabla q(\lambda)$ is the gradient of the dual function. For the dual function given by Equation (17), the Hessian and gradient are given by $H(\lambda) = -M(\nabla^2 f(y(\lambda)))^{-1}M$ and $g(\lambda) = My(\lambda)$, where $f = \sum_i f_i$ is the cumulative cost function summed over all the nodes. An approximate Newton direction is thus given by a solution to the following system of equations:

$$M \left( \nabla^2 f \left( y \left( \lambda^{[l]} \right) \right) \right)^{-1} M v^{[l]} = My^{[l]}, \tag{20}$$

which reduces to $dk$ SDD systems per node given by:

$$\left[ \mathfrak{L}v_r^{[l]} \right](i) = \sum_{p=1}^{dk} \frac{\partial^2 f_i(\cdot)}{\partial y_r(i) \partial y_p(i)} y_p^{[l]}(i) \tag{21}$$

for $i = 1, \ldots, n$ and $r = 1, \ldots, dk$, where the Newton direction vector $v^{[l]}$ is split into sub-vectors such that $v^{[l]} = \left[ (v_1^{[l]})^{\mathrm{T}}, \ldots, (v_{dk}^{[l]})^{\mathrm{T}} \right]^{\mathrm{T}}.$ The right hand side of Equation (21) can be computed locally without the need for the $i^{th}$ processor to communicate with any other nodes, and hence Equation (21) poses a set of simultaneous linear equations to be solved by the network. Those skilled in the art will be aware of known methods for computing approximate solutions to SDD systems of equations up to any given accuracy $\varepsilon$. In this example, the distributed method described in "Distributed SDDM Solvers: Theory and Applications" by R. Tutunov, H. Bou-Ammar, and A. Jadbabaie (ArXiv e-prints, 2015) is used to determine an approximate solution to the SDD system (21).

Having determined, in collaboration with the other processors in the network, the components of the vectors $v_r^{[l]}$ as a solution of Equation (21), the $i^{\text{th}}$ processor locally updates the $i^{\text{th}}$ components of the vectors $\lambda_r^{[l+1]}$ according to Equation (19), without the $i^{\text{th}}$ processor needing to communicate with any other nodes of then network. The $i^{\text{th}}$ processor then updates the corresponding $i^{\text{th}}$ components of the vectors $y_r^{[l+1]}$ as solutions of the following system of partial differential equations:

$$\frac{\partial f_i(\cdot)}{\partial y_r(i)} = -\left[ \mathfrak{L}\lambda_r^{[l+1]} \right](i) \quad \text{for } r = 1, \dots, dk. \tag{22}$$

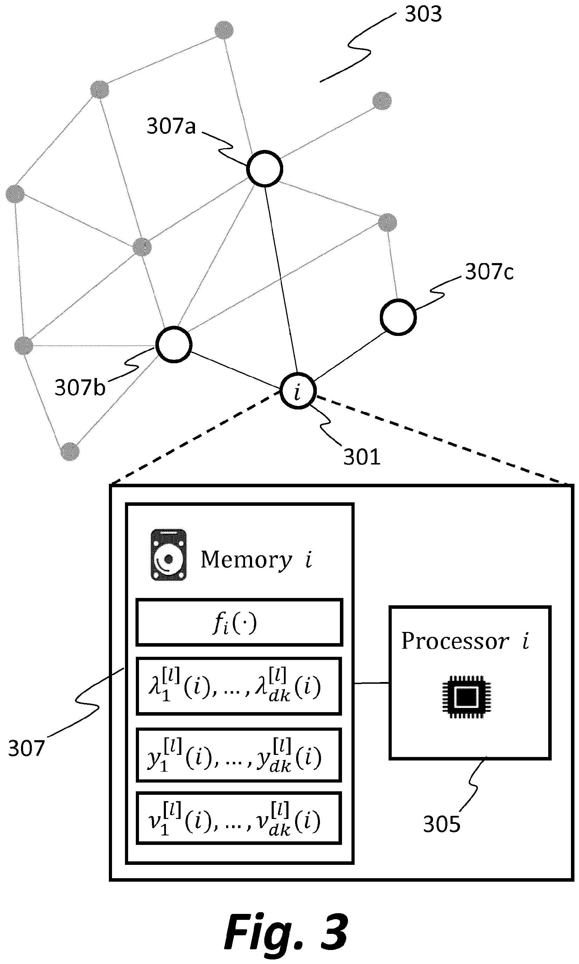

The $i^{\text{th}}$ processor is only required to receive data from nodes in its neighbourhood $N(i)$ in order to solve Equation (22). In other words, the $i^{\text{th}}$ processor is only required to receive data from memory that is directly accessible (accessible without the need to communicate with any of the other processors in the network) by processors in its neighbourhood $N(i)$. Figure 3 shows an example of a node 301, labelled $i$, in a network 303 according to the present invention. The node 301 has a processor 305 and an associated memory 307, which the processor 305 is able access directly without the need to communicate with any of the other processors in the network, and which in preparation for the $l^{\text{th}}$ update has stored: the cost function $f_i$; the $i^{\text{th}}$ components $\lambda_r^{[l]}(i)$ of the dual variable vectors; the $i^{\text{th}}$ components $y_r^{[l]}(i)$ of the primal variable vectors; and the $i^{\text{th}}$ components $\tilde{v}_r^{[l]}(i)$ of the approximate Newton direction vectors. Due to the structure of the Lagrangian matrix of the network graph, in solving Equation (22) the processor 305 of node 301 is required to receive components of $\lambda_r^{[l+1]}(j)$ for $j \in N(i)$, corresponding to components stored by nodes 307a-c. Explicitly, the right hand side of Equation (22) is given by:

$$-\left[ \mathfrak{L}\lambda_r^{[l+1]} \right]_i = \sum_{j \in N(i)} \left( \lambda_r^{[l+1]}(j) - \deg(i)\lambda_r^{[l+1]}(i) \right). \tag{23}$$

The procedure of updating $\lambda$ and $y$ continues until convergence is achieved, as determined by any suitable convergence criteria known in the art. When convergence has been achieved on all of the processors in the network, each processor has stored an updated version $L_i$ of the shared knowledge matrix $L$, where the copies are (approximately) equal to each other according to the consensus condition (12).

The routine for updating the shared knowledge base, as described above, is summarised by Figure 5. The network first determines, at S501, an approximate Newton direction in dual space. This is achieved by the $i^{\text{th}}$ processor computing the right hand side of Equation (21) locally without the need for the $i^{\text{th}}$ processor to communicate with any other nodes, and the network solving the resulting linear system of simultaneous equations (which requires communication between the nodes). The network next updates, at S503, the dual variables $\lambda$. In order to update the dual variables $\lambda$, the $i^{\text{th}}$ processor updates the $i^{\text{th}}$ components of $\lambda_r$ for $r$ = 1, ..., $dk$ using the corresponding components of the update rule (19). The network next updates, at S505, the primal variables $y$. In order to update the primal variables $y$, the $i^{\text{th}}$ processor solves Equation (22) locally, thereby determining the $i^{\text{th}}$ component of each of the sub-vectors $y_r^{[l+1]}$ for $r$ = 1, ..., $dk$. The procedure of updating $\lambda$ and $y$ continues until convergence is achieved. Finally, the $i^{\text{th}}$ processor reconstructs, at S507, the local version $L_i$ of the shared knowledge matrix $L$ from the corresponding converged components of $y$.

Having calculated an updated version $L_i$ of the shared knowledge matrix $L$, the $i^{\text{th}}$ processor then calculates updated task-specific vectors $s_t$ for each task it has been assigned by solving the corresponding minimisation problems (9). Finally, the $i^{\text{th}}$ processor uses the updated values of $L_i$ and $s_t$ to calculate the updated policy parameters $\tilde{\theta}_t = L_i s_t$ for $t$ = 1, ..., $T_i$.

Formulating the MTRL problem in accordance with the present invention leads to substantial advantages when compared with existing MTRL methods. In particular, the present method performs computations in a distributed manner, allowing the necessary computations for updating the policy parameters to be performed simultaneously by the *n* processors in the network. By contrast, the existing state of the art method described in "Scalable Multitask Policy Gradient Reinforcement Learning" by S. El Bsat, H. Bou Ammar, and M. E. Taylor (Proceedings of the Thirty-First AAAI Conference on Artificial Intelligence, pp 1847-1853, February 4-9, 2017), relies on computations being performed in a sequential manner, rather than a distributed manner, by the processors. Furthermore, the SDD property of the graph Laplacian employed in the present method ensures that the sequence $\{y^{[l]}, \lambda^{[l]}\}_{l \geq 0}$ of primal variables and dual variables calculated during the iterative loop of Figure 5 exhibits quadratic convergence, as opposed to linear convergence achieved by the most efficient existing methods.

**Performance**

In order to assess the performance of the method described herein, experiments were run in which the performance of a network implementing the present distributed MTRL method was compared against the performance of equivalent networks implementing existing methods. Specifically, solutions to the minimisation problem defined by (12) and (13) were implemented using the present method and several known methods, namely:

- Accelerated Dual Descent (ADD) as described in "Accelerated Dual Descent for Network Flow Optimisation" by M. Zargham, A. Ribeiro, A. E. Ozdagler, and A. Jadbabaie (IEEE Transactions on Automatic Control, 2014).

- Network Newton (NN) as described in "Network Newton-Part II: Convergence Rate and Implementation" by A. Mokhtari, Q. Ling, and A. Ribeiro (ArXiv e-prints, 2015).

- Alternating Direction Method of Multipliers (ADMM) as described in "Scalable Multitask Policy Gradient Reinforcement Learning" by S. El Bsat, H. Bou Ammar, and M. E. Taylor (Proceedings of the Thirty-First AAAI Conference on Artificial Intelligence, pp 1847-1853, February 4-9, 2017).

- Distributed Averaging (DA) as described in "Linear Time Average Consensus on Fixed Graphs and Implications for Decentralised Optimization and Multi-Agent Control" by A. Olshevsky (ArXiv e-prints, 2014).

- Distributed Subgradients (DS), as described in "Distributed Subgradient Methods for Multi-Agent Optimization" by A. Nedic and A. E. Ozdaglar (IEEE Trans. Automat. Contr. (1) pp 48-61, 2009).

In order to compare performances, convergence of the minimisation objective of (12) and convergence of the consensus error were separately investigated, where the consensus error is defined as the mean difference between the norms of the local copies $L_i$ computed by the network.

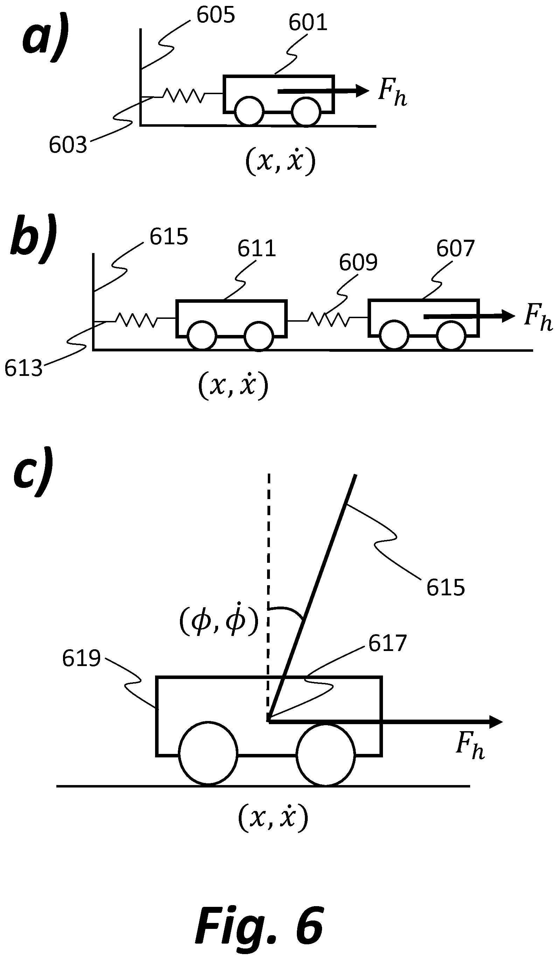

Initially, experiments were conducted using the three benchmark virtual task domains shown in Figure 6. Figure 6a shows a simple mass-spring (SM) system in which a cart 601 is connected by means of a linear spring 603 to a fixed wall 605. The objective is to control a force $F_h$ applied to the cart 601 such that the cart 601 reaches a specific state, for example $(x, \dot{x}) = (0,0)$. Specific tasks are parameterised by the mass of the cart 601, the spring constant of the spring 603, and the damping constant of the spring 603.

Figure 6b shows a double mass-spring (DM) system in which a first cart 607 is connected by means of a first linear spring 609 to a second cart 611, which is connected by means of a second linear spring 613 to a fixed wall 615. The objective is to control a force $F_h$ applied to the first cart 607 such that the second cart 611 reaches a specific state, for example $(x, \dot{x}) = (0,0)$. Specific tasks are parameterised by the mass of the first cart 607, the spring constant of the first spring 609, the damping constant of the first spring 609, the mass of the second cart 611, the spring constant of the second spring 613, and the damping constant of the second spring 613.

Figure 6c shows a cart-pole (CP) system in which a uniform rigid pole 615 is connected at one end by a hinge 617 to a cart 619. The objective is to control a force $F_h$ applied to the cart 619 such that the cart and pole end up in a specific state, for example $(x, x, \phi, \dot{\phi}) = (0,0,0,0)$. Specific tasks are parameterised by the mass of the cart 619, the mass and length of the pole 615, and a damping constant governing the torque exerted by the hinge 617.

For the experiments, 5000 SM tasks, 500 DM tasks, and 1000 CP tasks were generated by varying the task parameters. For the SM and DM domains, the tasks were distributed over a network of 10 nodes connected by 25 randomly-generated edges (the same network being used for all of the SM and DM experiments). For the CP domain, the tasks were distributed over a network of 50 nodes (5 nodes being associated with each of 10 processors) connected by 150 randomly-generated edges (the same network being used for all of the CP experiments). In each case, tasks were assigned evenly between the nodes.

Table 1 shows the number of iterations required to reduce the consensus error to $10^{-8}$ for several distributed

methods. For the present method - Symmetric Diagonally Dominant Newton (SDDN) - a single iteration includes steps S501-S505 of Figure 5.

Table 1: order of magnitude of number of iterations required to achieve a consensus error of $10^{-8}$.

|  | **SDDN** | ADD | NN | ADDM | DA | DS |
|---|---|---|---|---|---|---|
| SM | **$10^1$** | $10^2$ | $10^2$ | $10^4$ | $10^4$ | $10^5$ |
| DM | **$10^2$** | $10^3$ | $10^5$ | $10^4$ | $10^5$ | $10^5$ |
| CP | **$10^3$** | $10^4$ | $10^5$ | $10^5$ | $10^5$ | $10^5$ |

The results of Table 1 demonstrate that the present method yields an order of magnitude improvement in the number of iterations required to achieve consensus between nodes.

Experiments were conducted for two higher-dimensional task domains. The first task domain is a linear model of a CH-47 tandem-rotor "Chinook" helicopter (HC) flying horizontally at 40 knots. The objective is to control the collective and differential robot thrusts in order to stabilise the flight. 500 different HR tasks were generated by varying the separation of the rotors and damping coefficients of the rotors. The HC task domain has a 12-dimensional state space. The second higher-dimensional task domain is a dynamic model of a humanoid robot (HR) based on the model proposed in "The eMOSAIC model for humanoid robot control" by N. Sugimoto, J. Morimoto, S. H. Hyon, and M. Kawatom (Neural Networks, 13 January 2012). The task is to control policies to ensure stable walking conditions. 100 different HR tasks were generated by varying the length of the legs and the body. The HR task domain has a 36-dimensional state space.

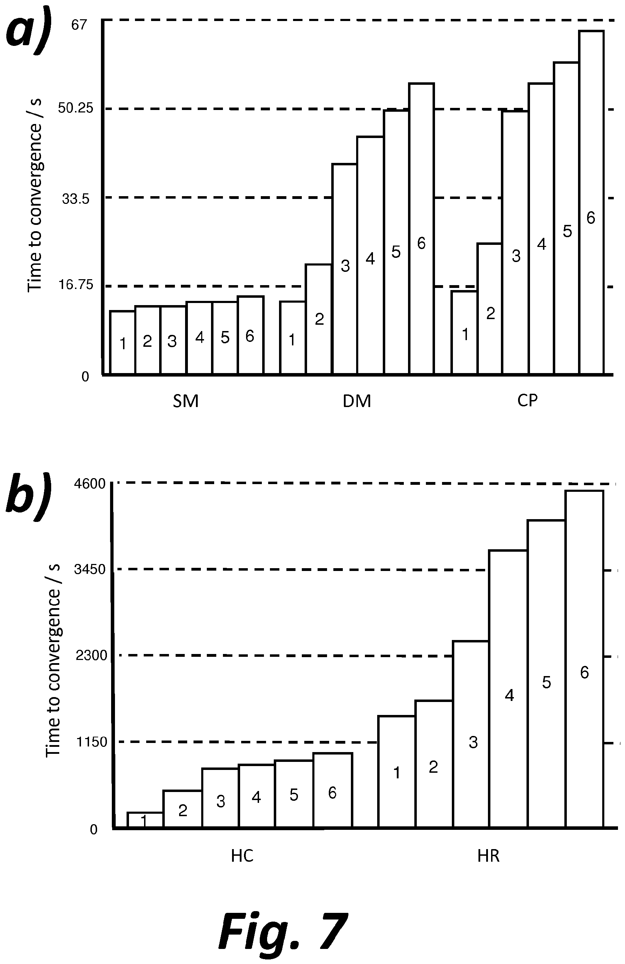

The bar charts of Figure 7 show the running time required to reach a consensus error of $10^{-5}$ for the five task domains (SM, DM, CP, HC, and HR) using the six methods mentioned above, for equivalent processor networks. The bars are numbered according to the method used as follows: 1 = SDDN; 2 = ADD; 3 = ADMM; 4 = DA; 5 = NN; 6 = DS. For each of the experiments in Figure 7, the tasks were distributed over a network of 20 nodes connected by 50 randomly-generated edges (the same network being used for all of the experiments). For each experiment, tasks were assigned evenly between the nodes. In every experiment, convergence was achieved in a shorter time for the present method (SDDN) than for any of the other methods.

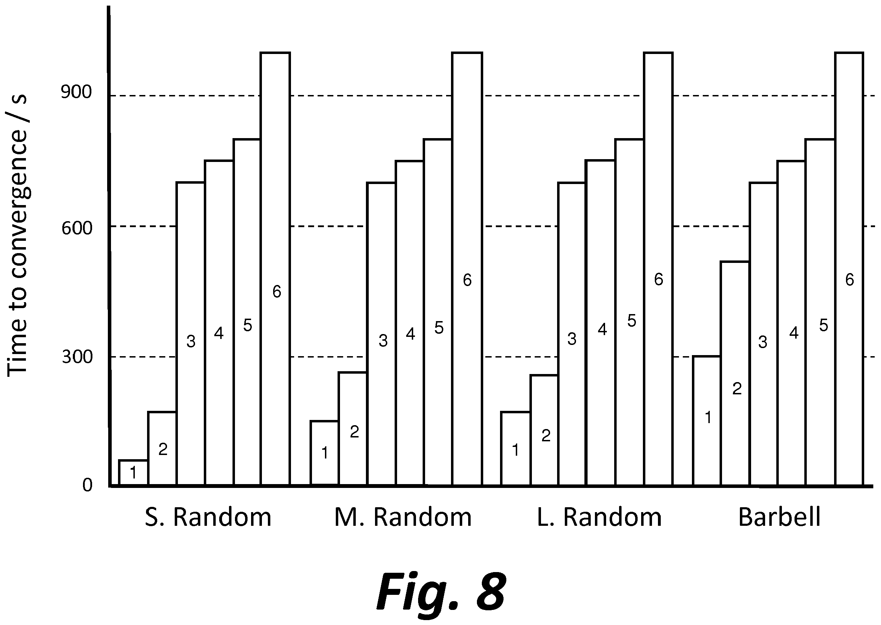

The bar chart of Figure 8 shows the effect of network topology on the time taken to reach a consensus error of $10^{-5}$ using the six methods mentioned above, for equivalent processor networks, for the HC task domain. Four network topologies were used: small random - 10 nodes connected by 25 randomly-generated edges; medium random - 50 nodes connected by 150 randomly-generated edges; large random - 150 nodes connected by 250 randomly-generated edges; and barbell - two cliques of 10 nodes each connected by a 10 node line graph. The bars are numbered in accordance with Figure 7. For each experiment, tasks were assigned evenly between the nodes. The experiments demonstrate that the increase in speed achieved by the present method is robust under changes of network topology.

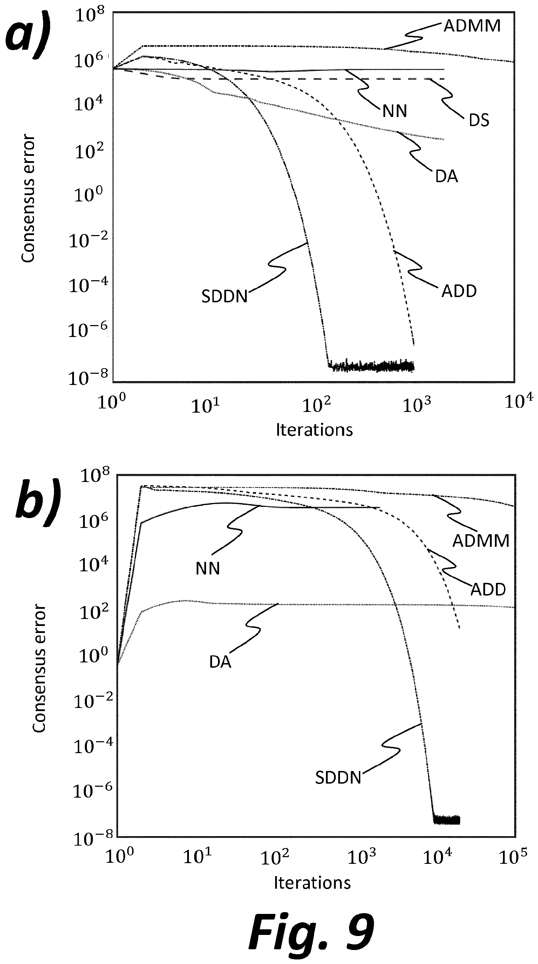

The plots of Figure 9 demonstrate the convergence of the consensus error with respect to the number of iterations for the experiments of Figure 7b. Figure 9a corresponds to the HC task domain, and Figure 9b corresponds to the HR task domain. For each of these task domains, the consensus error converges in fewer iterations for the present method (SDDN) than for any of the other methods.

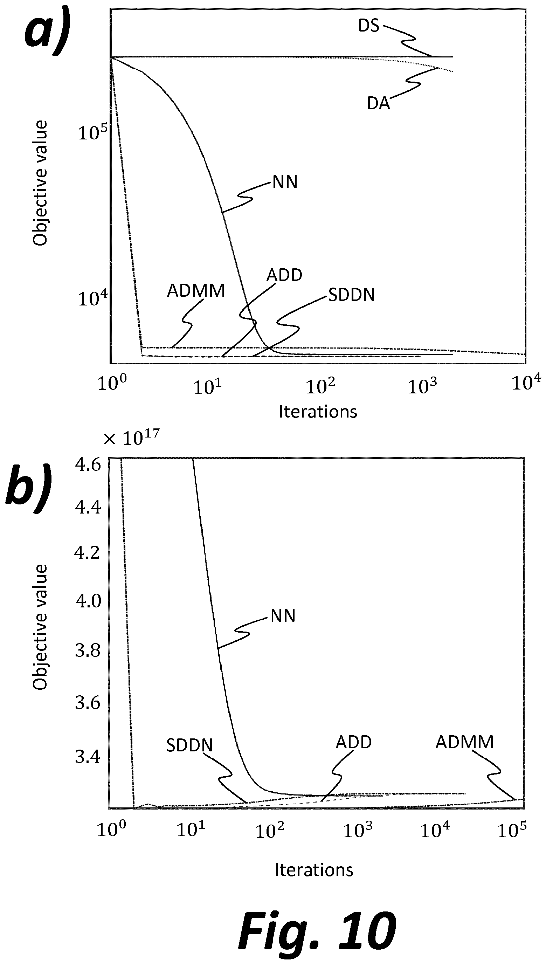

The plots of Figure 10 demonstrate the convergence of the objective (12) with respect to the number of iterations for the experiments of Figure 7b. Figure 10a corresponds to the HC task domain, and Figure 10b corresponds to the HR task domain. In Figure 10a, the number of iterations required to reach convergence appears indistinguishable for the present method (SDDN) and ADD, and the objective (12) appears to converge in fewer iterations for SDDN and ADD than for the other methods. However, convergence is only achieved when the consensus error has also converged, and therefore Figure 9a shows that convergence is achieved in fewer iterations for SDDN than for ADD. For the HR task domain of Figure 9b, the objective (12) converges in fewer iterations for SDDN than for any of the other methods.

**Example computing device**

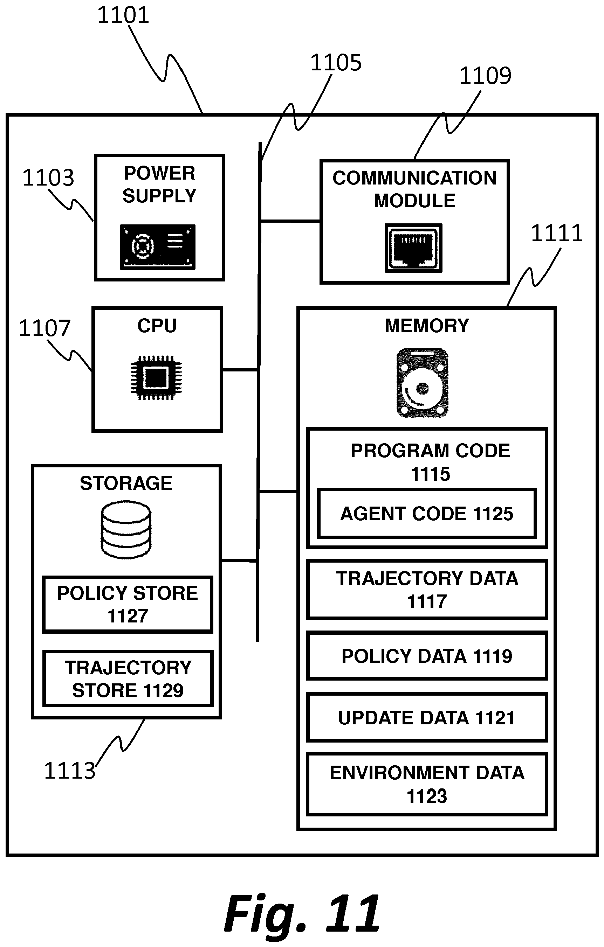

Figure 11 shows an example of a computing device 1101 configured for use in a network in accordance with the present invention in order to implement the methods described above. Computing device 1101 includes power supply 1103 and system bus 1105. System bus 1105 is connected to: CPU 1107; communication module 1109; memory 1111; and storage 1113. Memory 1111 stores: program code 1115; trajectory data 1117; policy data 1119; update data 1121; and environment data 1123. Program code 1115 includes agent code 1125. Storage 1113 includes policy store 1127 and trajectory store 1129. Communication module 1109 is communicatively connected to communication modules of neighbouring computing devices in the network.

In this example, agent code 1123 is run to implement a policy based on policy data 1119, and accordingly generates trajectory data 1117 through interaction with simulated tasks (the tasks being defined according to environment data 1123). Having generated trajectory data 1117, computing device 1101 communicates with neighbouring devices in the network to generate update data 1121, which is then used to update the policy data 1119. Optionally, policy data 1119 and trajectory data 1117 are stored in the policy store 1127 and the trajectory store 1129 respectively.

In other examples, a computing device may receive trajectory data generated by simulated tasks run on other devices, or alternatively by agents associated with real-life entities such as autonomous robots.

The above embodiments are to be understood as illustrative examples of the invention. Further embodiments of the invention are envisaged. In particular, the computations described in the method above may be distributed between one or more processors having multiple processor cores.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

**Claims**

1. A computer-implemented method of determining policy parameters for each of a plurality of reinforcement learning tasks, the policy parameters depending on:

    i) a common set of parameters shared by the plurality of tasks; and
    ii) a task-specific set of parameters,

    the method comprising each of a plurality of processors:

    receiving trajectory data from a subset of the plurality of tasks; and
    determining, using the received trajectory data:

        i) a local version of the common set of parameters; and
        ii) the task-specific set of parameters for each of the subset of the plurality of tasks,

    wherein determining the local version of the common set of parameters comprises iteratively:

        locally determining, from the received trajectory data, partial input data for determining a first set of intermediate variables;
        taking part in a distributed computation with the other processors of the plurality of processors, whereby to determine, using the partial input data, the first set of intermediate variables; and
        updating, using a subset of the first set of intermediate variables, the local version of the common set of parameters,

    wherein, after at least one iteration, the local versions of the common set of parameters determined by the plurality of processors converge.

2. The method of claim 1, wherein the first set of intermediate variables comprises components of an approximate Newton direction vector.

3. The method of claim 2, wherein taking part in a distributed computation comprises determining an approximate solution to one or more symmetric diagonally-dominant linear systems of equations.

4. The method of any previous claim, wherein updating the local version of the common set of parameters comprises locally determining a second set of intermediate variables.

5. The method of any previous claim, wherein each processor is communicatively coupled with a subset of the plurality of processors, and updating the local version of the common set of parameters comprises receiving data that is directly accessible by the subset of the plurality of processors.

6. The method of any previous claim, further comprising determining, after at least one iteration, that the local versions of the common set of parameters determined by the plurality of processors have converged.

7. The method of any previous claim, further comprising generating control signals for one or more entities in a real world system.

8. A computer processor configured to perform the method of any previous claim.

9. A computer program product comprising instructions which, when executed by a processor, cause the processor to carry out the method of any of claims 1 to 6.

10. A distributed computing system operable to determine policy parameters for each of a plurality of reinforcement learning tasks, the policy parameters depending on:

   iii) a common set of parameters shared by the plurality of tasks; and
   iv) a task-specific set of parameters,

   the system comprising a plurality of processors connected to form a network, each processor operable to:

   receive trajectory data from a subset of the plurality of tasks; and
   determine, using the received trajectory data:

      i) a local copy of the common set of parameters;
      ii) the task-specific set of parameters for each of the subset of the plurality of tasks,

   wherein determining the local copy of the common set of parameters comprises iteratively:

   locally determining, from the received trajectory data, partial input data for determining a first set of intermediate variables;
   taking part in a distributed computation with the other processors of the plurality of processors, whereby to determine, using the partial input data, the first set of intermediate variables; and
   updating, using a subset of the first set of intermediate variables, the local version of the common set of parameters,

   wherein, after at least one iteration, the local versions of the common set of parameters determined by the plurality of processors converge.

11. The system of claim 10, wherein the first set of intermediate variables comprises components of an approximate Newton direction vector.

12. The system of claim 11, wherein taking part in a distributed computation comprises determining an approximate solution to one or more symmetric diagonally-dominant linear systems of equations.

13. The system of any of claims 10 to 12, wherein updating the local version of the common set of parameters comprises receiving data that is directly accessible by a neighbouring subset of processors.

14. The system of any of claims 10 to 13, further operable to determine, after at least one iteration, that the local versions of the common set of parameters determined by the plurality of processors have converged.

15. The system of any of claims 10 to 14, further operable to generate control signals for one or more entities in a real world system.

a)

$(\phi, \dot{\phi})$

101

103

$F_h$

$(x, \dot{x})$

b)

$(0,0)$

101

103

$(0,0)$

**Fig. 1**

**Fig. 2**

**Fig. 3**

```
┌─────────────────────────────────────┐
│      Assign tasks to processors      │
└─────────────────────────────────────┘
                  │
                  ▼                         S401
┌─────────────────────────────────────┐
│        Receive trajectory data       │
└─────────────────────────────────────┘
                  │                         S403
                  ▼
┌─────────────────────────────────────┐
│      Update shared knowledge matrix  │
└─────────────────────────────────────┘
                  │                         S405
                  ▼
┌─────────────────────────────────────┐
│     Update task-specific projections │
└─────────────────────────────────────┘
                                            S407
```

# Fig. 4

```
┌─────────────────────────────────────┐
│    Determine approximate Newton      │
│       direction in dual space        │
└─────────────────────────────────────┘
                  │                         S501
                  ▼
┌─────────────────────────────────────┐
│        Update dual variables         │
└─────────────────────────────────────┘
                  │                         S503
                  ▼
┌─────────────────────────────────────┐
│        Update primal variables       │
└─────────────────────────────────────┘
                  │                         S505
                  ▼
┌─────────────────────────────────────┐
│   Reconstruct shared knowledge matrix│
└─────────────────────────────────────┘
                                            S507
```

Until converged

# Fig. 5

a)

605

601

603

$F_h$

$(x, \dot{x})$

b)

615

611

609

607

613

$F_h$

$(x, \dot{x})$

c)

$(\phi, \dot{\phi})$

615

619

617

$F_h$

$(x, \dot{x})$

**Fig. 6**

Fig. 7

Fig. 8

Fig. 9

**Fig. 10**

**Fig. 11**

Europäisches
Patentamt

European
Patent Office

Office européen
des brevets

# EUROPEAN SEARCH REPORT

Application Number

EP 18 27 5016

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ZHAN YUSEN ET AL: "Scalable lifelong reinforcement learning", PATTERN RECOGNITION, vol. 72, 23 July 2017 (2017-07-23), pages 407-418, XP085169865, ISSN: 0031-3203, DOI: 10.1016/J.PATCOG.2017.07.031 * the whole document * | 1-15 | INV. G06N3/00 G06N7/00 G06N99/00 |
| Y | TUTUNOV RASUL ET AL: "An exact distributed newton method for reinforcement learning", 2016 IEEE 55TH CONFERENCE ON DECISION AND CONTROL (CDC), IEEE, 12 December 2016 (2016-12-12), pages 1003-1008, XP033030421, DOI: 10.1109/CDC.2016.7798399 [retrieved on 2016-12-27] * the whole document * | 1-15 | |
| Y,D | El Salam ET AL: "Scalable Multitask Policy Gradient Reinforcement Learning", , 13 February 2017 (2017-02-13), XP055489981, Retrieved from the Internet: URL:https://pdfs.semanticscholar.org/97d9/5796d188b77cc0052a63ad423c998748fa7d.pdf [retrieved on 2018-07-04] * the whole document * | 1-15 | TECHNICAL FIELDS SEARCHED (IPC) G06N |

-/--

The present search report has been drawn up for all claims

| Place of search | Date of completion of the search | Examiner |
|---|---|---|
| The Hague | 18 July 2018 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 18 27 5016

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Abhishek Kumar ET AL: "Learning Task Grouping and Overlap in Multi-task Learning", 27 June 2012 (2012-06-27), XP055489682, Retrieved from the Internet: URL:https://pdfs.semanticscholar.org/d3c0/4a424fff21d3d12ff8b0543734cf244d5f67.pdf [retrieved on 2018-07-04] * the whole document * ----- | 1-15 | |
| A | Haitham Bou Ammar ET AL: "Online Multi-Task Learning for Policy Gradient Methods", 26 June 2014 (2014-06-26), XP055489685, Retrieved from the Internet: URL:http://proceedings.mlr.press/v32/ammar14.pdf [retrieved on 2018-07-03] * the whole document * ----- | 1-15 | |

TECHNICAL FIELDS
SEARCHED (IPC)

The present search report has been drawn up for all claims

| Place of search | Date of completion of the search | Examiner |
|---|---|---|
| The Hague | 18 July 2018 | Moro Pérez, Gonzalo |

EPO FORM 1503 03.82 (P04C01)

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. EL BSAT ; H. BOU AMMAR ; M. E. TAYLOR.** Scalable Multitask Policy Gradient Reinforcement Learning. *Proceedings of the Thirty-First AAAI Conference on Artificial Intelligence,* 1847-1853
- **R. TUTUNOV ; H. BOU-AMMAR ; A. JADBABAIE.** *Distributed SDDM Solvers: Theory and Applications,* 2015
- **S. EL BSAT ; H. BOU AMMAR ; M. E. TAYLOR.** Scalable Multitask Policy Gradient Reinforcement Learning. *Proceedings of the Thirty-First AAAI Conference on Artificial Intelligence,* 04 February 2017, 1847-1853
- **M. ZARGHAM ; A. RIBEIRO ; A. E. OZDAGLER ; A. JADBABAIE.** Accelerated Dual Descent for Network Flow Optimisation. *IEEE Transactions on Automatic Control,* 2014
- **A. MOKHTARI ; Q. LING ; A. RIBEIRO.** Convergence Rate and Implementation. *Network Newton,* 2015
- **A. OLSHEVSKY.** *Linear Time Average Consensus on Fixed Graphs and Implications for Decentralised Optimization and Multi-Agent Control,* 2014
- **A. NEDIC ; A. E. OZDAGLAR.** Distributed Subgradient Methods for Multi-Agent Optimization. *IEEE Trans. Automat. Contr.,* 2009, vol. 1, 48-61
- **N. SUGIMOTO ; J. MORIMOTO ; S. H. HYON ; M. KAWATOM.** The eMOSAIC model for humanoid robot control. *Neural Networks,* 13 January 2012